Europäisches Patentamt

European Patent Office

Office européen des brevets

(11) Publication number: **0 207 572**
**A1**

## (12) EUROPEAN PATENT APPLICATION

(21) Application number: 86201137.6

(22) Date of filing: 27.06.86

(51) Int. Cl.⁴: **A 01 J 7/00**
**A 01 J 5/08, A 01 K 13/00**
**A 01 K 1/12**

(30) Priority: 01.07.85 NL 8501884

(43) Date of publication of application:
07.01.87 Bulletin 87/2

(84) Designated Contracting States:
DE FR GB NL SE

(71) Applicant: C. van der Lely N.V.
Weverskade 10 P.O. Box 26
NL-3155 ZG Maasland(NL)

(72) Inventor: Van der Lely, Cornelis
7, Brüschenrain
Zug(CH)

(74) Representative: Mulder, Herman et al,
Octrooibureau Van der Lely N.V. Weverskade 10 P.O. Box 26
NL-3155 ZG Maasland(NL)

(54) An implement for milking animals.

(57) An implement for milking animals (1), such as cows, comprising at least a milking parlour and a milking machine (14) and being provided with at least one teat cup (15) connectable to a teat (17) of the animal. Thw teat cup (15) is provided with a cleaning device (16) which is positioned substantially symmetrically around the centreline of the teat cup (15). Cleaning liquid or air may be supplied to the cleaning device through the milk tube. The teat cup (15) and the cleaning device (16) may be movable with respect to each other, so that the cleaning operation and the milking operation can be performed subsequently. The cleaning device (16) may comprise a rotary brush (23).

EP 0 207 572 A1

./...

Croydon Printing Company Ltd.

FIG. 3

## AN IMPLEMENT FOR MILKING ANIMALS

The invention concerns an implement for milking animals, such as cows, comprising at least one milking parlour and at least one milking machine having at least one teat cup connectable to a teat of the animal.

With such an implement, and during use thereof, it is of importance that the necessary hygiene is ensured. The cleaning of the teats of the udder, prior to the commencement of the milking operation, may benefit the said hygiene.

In this application, by "cleaning" is understood both washing, rinsing and disinfecting, which cleaning may be effected both by means of a cleaning liquid (e.g. water) and by means of a spraying substance.

The invention contemplates an implement for milking animals, by means of which it is possible to both clean the teats and connect the teat cups in an effective manner.

In accordance with the invention, to this end the teat cup includes a cleaning device, so that together with the positioning of the teat cup relative to the teat also the cleaning device is brought into the desired position. In this manner, an effective cleaning may take place, because it may be restricted to that area of the udder or teat which is eligible therefor. In addition, a saving of time may be obtained, since the cleaning device and the teat cup are simultaneously brought to the desired position and may be simultaneously connected to the relevant teat of the udder. Preferably, the cleaning device is arranged to the teat cup near its top side, so that, during the cleaning step, the said teat cup is situated under the teat.

Furthermore, in accordance with the invention, the cleaning device may be positioned substantially symmetrically around the centreline of the teat cup, so that the cleaning device is situated symmetrically around the relevant teat of the udder when the teat cup is thereunder.

The cleaning may be effected by spraying a spraying substance onto the teat, but, in case a cleaning liquid is used, in accordance with an other feature of the invention, the milk tube of the teat cup may be employed for supplying same to the cleaning device, said tube being available for the purpose when no milking takes place and being then also cleaned. In accordance with a further feature of the invention, heated or non-heated air may be passed through the same milk tube to the teat for the purpose of drying same, which may have the additional effect of drying the said milk tube as well.

In accordance with a still further feature of the invention, the teat cup may be movable in height relative to the cleaning device, so that, after the relevant teat has been cleaned, the teat cup can be raised in order to be able to start the milking procedure. The teat cup then moves upwardly inside the cleaning device, whereby the outside of the teat cup can cover the inside of the cleaning device.

In accordance with a still further feature of the invention, in an implement comprising a milking cluster having several teat cups, at least one teat cup together with the cleaning device may be mounted on the milking cluster movably in a horizontal plane. This enables an adjustment to the relative positions of the animal's teats prior to connecting the milking cluster. In accordance with a still further feature of the invention, one or more teat cups together with cleaning device may be fixable to the milking cluster in various positions.

In accordance with a still further feature of the invention, in order to faciliate connecting the teat cup together with cleaning device, the said cleaning device may comprise a flexible, conical catching device for the teat, whereby the funnel shape of the catching device can be conducive to a correct positioning of the cleaning device relative to the teat and, by connection to the udder, can at the same time establish a sealing around the teat.

In accordance with a still further feature of the invention, the cleaning device may comprise a brush which may be designed rotatably. In accordance with the invention, the brush may then be substantially annular and have inwardly directed hairs, it being possible for the brush to be positioned around the teat, so that the hairs are directed towards the teat. By "annular" is meant here also "tubular".

In accordance with a still further feature of the invention, the brush may include a bearing at its outer circumference, so that a rotation about the axis of symmetry of the annular body can be performed without support in the central portion. For this purpose, the brush may be driven by means of an electric motor.

In accordance with the invention, the brush may have such a shape that the hairs are directed from the annular body inwardly but do not reach as far as the centreline, so that the central portion of the brush is hollow.

Furthermore, in accordance with the invention, several cleaning devices may be mounted on a support, at least one cleaning device being movable and fixable in a horizontal plane relative to an other cleaning device, so that the cleaning devices can be brought into a desired position corresponding to the position of the relevant animal's teats.

In accordance with a still further feature of the invention, an implement for milking animals, such as cows, comprising at least one milking parlour and at least one milking machine having several teat cups mounted on a milking cluster may be provided with an electronic camera for observing the position of the teats of the animal's udder and with means for adjusting the position of the teat cups on the basis of the position observed. In this connection, it is not required that the position of the animal's teats is known beforehand and is stored e.g. in the memory of a computer, but the adaptation to the position of the relevant animal's teats is effected dependent on the real position at the moment when the animal is present in the milking parlour. The image of the udders registered by the electronic camera may be scanned electronically in a known manner, on the basis of which the position of the teats can be translated to a desired adjustment of the teat cups. The electronic camera used for the purpose may function optically, in which connection it may be useful to provide the teats, or parts thereof, with a permanent colour. However, the electronic camera may also register an infra-red image, in which the teats and the udder are detected on account of the thermal difference between the teats, the udder and the surroundings.

In accordance with a feature of the invention, the electronic camera may be mounted between the teat cups and be directed upwardly, so that from below an overall image of the udder and teats is registered, which provides a satisfactory survey for obtaining the information desired.

Then, in accordance with a further feature of the invention, the milking cluster may include a cleaning device or each teat cup may include a cleaning device.

In accordance with a still further feature of the invention, an implement for milking animals, such as cows, comprising at least one milking parlour and at least one milking machine having a milking cluster with teat cups may include a swivable flap, on which the milking cluster is mounted. Such a swivable flap may serve both as a support for the milking cluster and as a protection, respectively screen, for the milking cluster, both in non-operative condition when it is required to cover or screen the milking cluster and in operative condition when it is required to prevent the milking cluster from being damaged or contaminated by the animal.

In this connection, the flap may be swivable about a substantially horizontal shaft at the level of the milking parlour floor, so that the flap, when swung down, constitutes part of the milking parlour floor. In accordance with a still further feature of the invention, the flap may, in its position during milking, form a protection for the milking cluster relative to the animal's hindlegs, in particular so when the shaft, about which the flap is swivable, is positioned transverse to the milking parlour and immediately in front of the animal's hindlegs.

In this connection, in accordance with the invention, the flap may have such a shape that, in the position during milking, the central portion is situated lower than the two side portions, so that the central portion cannot come into contact with the animal's udder. In accordance with a still further feature of the invention, the said flap may be adjustable by means of hydraulic or pneumatic means.

In accordance with the invention, there may be provided means for removing the milking cluster along the swivable flap, so that the milking cluster can be moved towards the udder when the flap is in the operative position. Then, in accordance with the invention, the movement of the milking cluster relative to the flap may be accomplished by means of a rotatable screw spindle or by means of hydraulic or pneumatic activators. In accordance with a still further feature of the invention, the milking cluster may then include a cleaning device, or each teat cup may include a cleaning device.

In accordance with the invention, an implement for milking animals, such as cows, comprising at least one milking parlour and at least one milking machine having a milking cluster connectable to the animal's udder may include a cleaning device, and cleaning liquid may be supplied and milk may be discharged through the milk tube, while the teat cup may be positioned spaced apart from the teat when the cleaning liquid is supplied through said milk

tube. The cleaning liquid may be spouted against the teat.

Equally, in accordance with the invention, there may be present means for metering fodder during milking, so that it is possible to combine the eating of e.g. concentrated fodder with the milking operation.

Furthermore, in accordance with the invention, the milking parlour may be incorporated in a loose stable, to which the animal, whether or not incited to do so from the outside, can go in order to be milked.

In connection with an efficient utilization of the space, in accordance with the invention, the milking cluster may in its rest position be located under the milking parlour floor. Such an isolated position for the milking cluster is also of importance in order to prevent damage and contamination.

In accordance with a still further feature of the invention, in order to facilitate the connection of a milking cluster, or a teat cup, there may be provided means for limiting the animal's liberty of movement in the forward, rearward, sideward or upward direction.

The implement for milking animals, such as cows, may be arranged in a loose stable or in the field or in other places where the animals can move freely, and its working can be described as follows.

A cow, due to be milked, goes to the milking parlour where she is limited in her movements in the forward, rearward, sideward and downward direction. Then, a flap in the floor, in front of the cow's hindlegs, moves from a substantially horizontal position towards an upwardly directed position, as a result of which the milking machine can easily be connected to the cow's udder. In addition, said flap prevents the cow from damaging the milking cluster by means of her hindlegs.

The milking cluster, which was present under the substantially horizontally extending flap, moves together with said flap from a substantially horizontal position towards an upwardly directed position.

Subsequently, the position of the teats is determined by means of the camera mounted on the milking cluster. These data are processed in a computer or in an other control apparatus, after which the teat cups are brought automatically into the correct position for connection thereof to the cow's teats.

Near the camera there is present apparatus for ultrasonically measuring the distance. In this manner, the distance from the milking cluster to the cow's udder is measured, after which by means of the control apparatus the milking cluster is moved upwardly to into the correct position for a satisfactory connection of the udder's teats to the milking cluster.

A teat cup comprises a flexible, conical catching device, a cleaning device and the known pulsating milking machine. When the milking cluster is connected to the cow's udder, water is supplied to the cleaning device. The cleaning device includes a rotary, fine-haired brush which is driven by a small electric motor. The water is supplied through the teat cup and discharged through a separate rinse water discharge line.

Once the cleaning has been completed and the rinse water has been discharged, possibly pre-heated air may be passed through the supply line for the purpose of blowing the teat dry. Then the teat cup is moved upwardly relative to the cleaning device.

After the cow has been milked automatically, the milking cluster retreats to under the floor level, after which the floor can be closed. The cow is then allowed to leave the milking parlour.

The automatic milking may be done four or more times during 24 hours, which may increase the milk yield. Furthermore, the milking machine may be employed more continuously, which decreases the operating expenses.

For a better understanding of the invention and to show how the same may be carried into effect, reference will now be made, by way of example, to the accompanying drawings, in which:

Figure 1 is a view of an animal in the milking parlour, the milking machine being connected,

Figure 2 is a schematic cross-section of a teat cup cum cleaning device on the line II - II in Figure 4,

Figure 3 is a schematic view of a connected milking cluster,

Figure 4 is a cross-section on the line IV - IV in Figure 3,

Figure 5 is a schematic rear view of the implement, and

Figures 6, 7 and 8 are schematic views of the various positions of the milking machine.

In the various drawings, corresponding parts have been indicated by the same reference numerals.

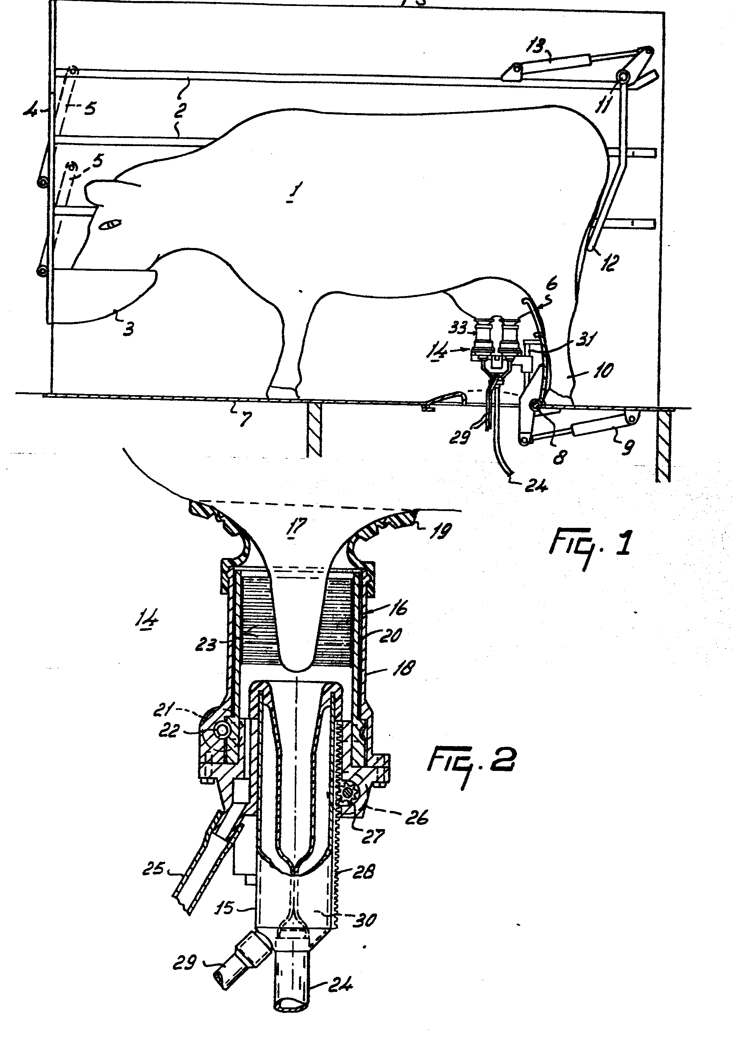

Figure 1 shows an animal 1, in this case a cow, located in a milking parlour. The animal 1 is located between lateral partitions constituted by a tubular frame 2 and is allowed to eat from a manger 3 attached to an exit door 4. The exit door 4 is adapted to swivel upwardly by means of swivel arms 5 when the animal leaves the milking parlour. A swivable flap 6, which is adapted to swivel about a pivot shaft 8 arranged at the level of the milking parlour floor 7, is shown in upwardly directed position. The swivelling movement of flap 6 about pivot shaft 8 is effected by means of a hydraulic or pneumatic cylinder unit 9. The pivot shaft 8 is situated exactly in front of the cow's hindlegs 10. By means of a bracket 12 swivable about a pivot shaft 11 the cow is kept in the position in which the hindlegs stand near the pivot shaft 8, at least the cow being prevented from moving rearwardly. The bracket 12 is swivelled by means of a hydraulic or pneumatic cylinder unit 13.

The milking machine 14, which is mounted slidably on flap 6, is shown in Figure 1 in the position connected to the udder. As is apparent from the Figure, the flap 6 constitutes a protection of the milking machine against damage or contamination from the rear side, that is to say the side where the hindlegs 10 of the animal are situated.

Figure 2 schematically shows a teat cup 15 including a cleaning device 16 which is connected to the schematically shown teat 17 of an animal. The unit shown comprises a stationary part 18 to which is arranged a flexible, funnel-shaped part 19, which constitutes the catching device for the teat 17. The funnel-shaped part 19 also constitutes a cover against the animal's udder. Inside the stationary part 18 there is located an annular part, in this case a tubular part 20, which is adapted to rotate about its longitudinal axis therein and which is driven by a schematically shown electric motor 21, e.g. by means of a worm wheel 22. At its inside, the tubular part 20 comprises hairs 23 constituting an inwardly directed brush. As a result of the rotation of the tubular part 20, the hairs 23 move over the teat, thus cleaning and massaging same. During cleaning, water or other liquid can be supplied through the milk tube 24 and be discharged through line 25. It is also possible to supply through tube 24 heated or non-heated air in order to dry the teat 17 and, if necessary, parts of the milking machine.

The stationary part 18 also comprises an electric motor 26 which includes a pinion 27 co-operating with a rack 28 connected to the teat cup 15. By means of the electric motor 26 it is possible to move the teat cup 15 in the vertical direction towards the teat 17 in order to allow of the milking operation.

The teat cup 15 comprises a milk tube 24 which, during milking, discharges the milk. Furthermore, there is present a pulsating tube 29, through which in otherwise known manner an alternating pressure can be effected in the teat holder 30.

By means of a support arranged at the stationary part 18, the implement shown in Figure 2 can be brought into a position under the teat 17, after which it is connected thereto by means of an upwardly directed movement. In order to clean the teat 17, the tubular part 20 is subsequently rotated for some time, during which cleaning liquid is supplied through milk tube 24 and discharged through discharge tube 25. After a predetermined period of time, the supply of cleaning liquid is stopped and pre-heated air is supplied through the milk tube 24 and, after a sufficient drying has been effected, the teat cup 15 is raised and the milking operation can be started.

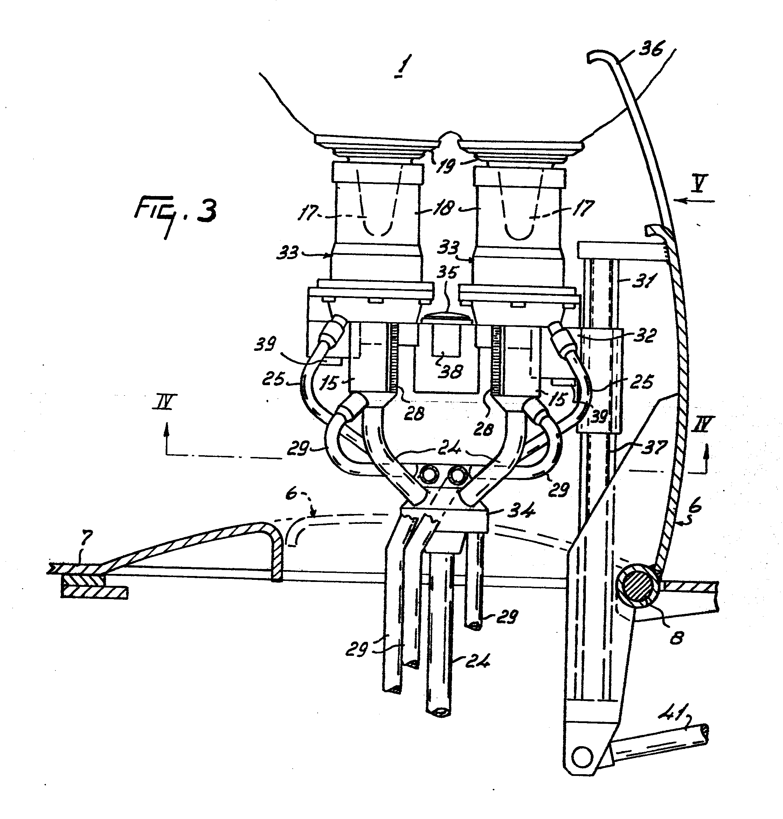

Figure 3 is a side view showing two devices according to Figure 2. Figure 3 corresponds to part of Figure 1. In Figure 3 is shown part of the milking parlour floor 7, the flap 6 being swivelled about pivot shaft 8 in a substantially vertical position. To the flap 6 is mounted a guide rod 31, along which a support 32 is slidable by means of an, otherwise not shown, electric motor or in any other way, such as hydraulically or pneumatically. The support 32 is connected with the stationary part 18 of the two milking units 33 shown, which are each constituted by teat cup 15, catching part 19 and stationary part 18. The various conduits of the milking units are joined in the milking claw 34 and subsequently extend to an other part of the milking machine.

The support 32 furthermore comprises an electronic camera 35 for observing the teats, on account of which observation the milking units 33 are brought into a position relative to the support 32 suitable with regard to the animal. In addition, the support comprises a sensor 38, e.g. an ultrasonic transmitter and receiver, by means of which the distance to the udder can be determined and by means of which the height of the implement can be adjusted.

It will be obvious that in Figure 3 the milking units 33 are shown in the cleaning position, that is to say that the teat cup 15 is situated in the downwardly pushed position relative to the stationary part 18.

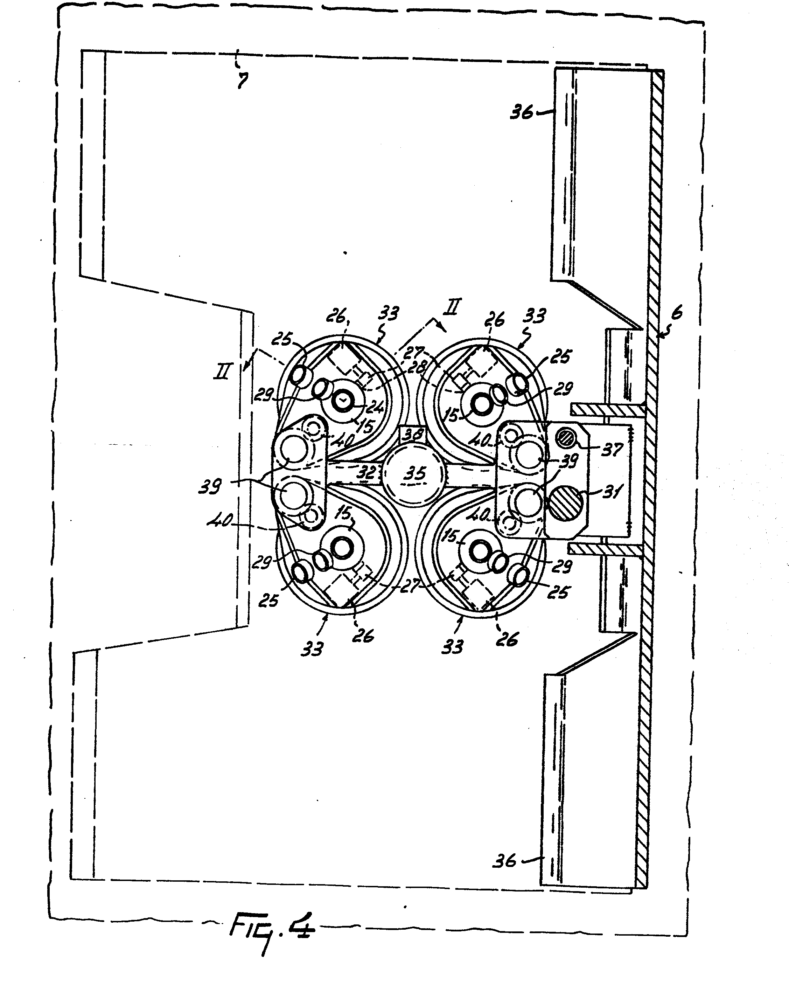

Figure 4 is a schematic bottom view of the implement shown in Figure 3, the cross-section shown in Figure 2 being indicated by the arrows II - II. Figure 4 shows the flap 6, it being indicated that the two side portions 36 extend higher than the central portion thereof, so that, during swivelling of the flap 6 about the pivot shaft 8, the animal's udder is not touched. To the flap 6 is mounted the guide rod 31 and furthermore there is shown the screw spindle 37, by means of which the support 32 can be adjusted in height. On the support is shown the electronic camera 35 and the ultrasonic sensor 38.

The four milking units 33 shown are each pivotably mounted about a shaft 39 on a support 32. The angular rotation of each milking unit relative to the pivot shaft 39 can be adjusted by means of schematically shown electric motors 40, so that each milking unit can be fixed in a position suitable for the relevant animal.

In addition, in Figure 4 there are shown electric motors 26 which by means of pinions 27 and racks 28 can slide the teat cups 15 in height relative to the cleaning device. Also, with each of the four milking units there are shown the various tubes, i.e. the milk tube 24 for supplying cleaning liquid and air and for discharging milk, the discharge tube 25 for discharging cleaning liquid, and the pulsating tube 29 for supplying an alternating pressure to the teat holder.

By means of dash lines is indicated schematically the opening in the milking parlour floor 7, which opening has a shape which substantially corresponds to that of the flap 6.

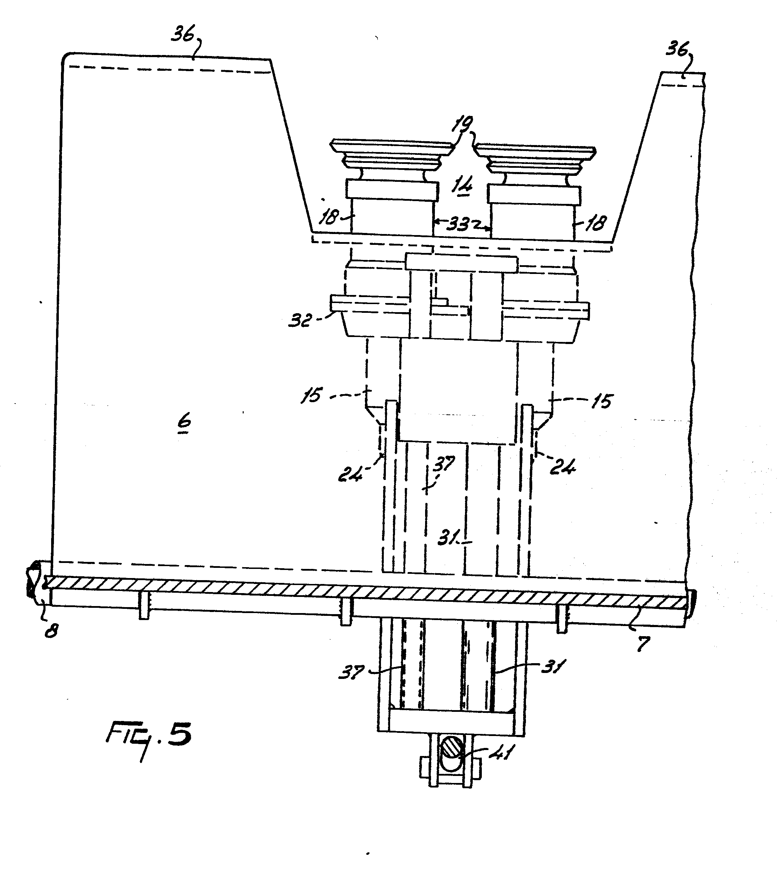

Figure 5 schematically shows a view corresponding to arrow V in Figure 3, from the rear towards the flap 6, in which view the higher extending side portions 36 have been clearly indicated. Behind the flap 6 there is situated the part of the milking machine to be connected to the animal's udder, two milking units 33 being visible, each of which having the flexible, funnel-shaped catching device 19. The two milking units 33 are connected with the support 32 indicated by dash lines, which support is connected slideably in height with the flap 6, as has been described previously. The flap 6 is pivotable about the shaft 8, for which purpose there is present a hydraulic cylinder, the piston rod 41 of which is indicated at the bottom in Figure 5.

Figures 6, 7, 8 and 9 show the various stages of the procedure to be performed by means of the implement for

0207572

milking according to the invention.

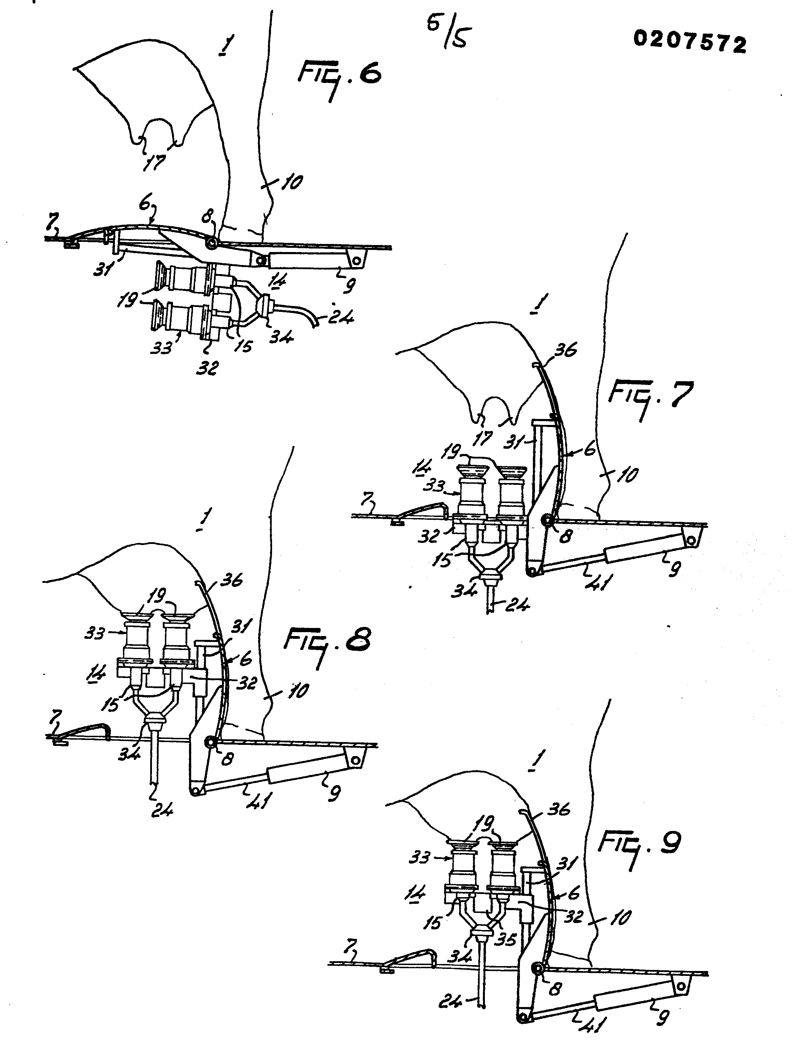

Figure 6 shows part of the milking parlour floor 7, the flap 6 being swivelled downwardly and thus constituting part thereof. After the animal, in this case a cow, has entered the milking parlour, her hindlegs will be situated near the pivot point 8 of the flap 6. If the hindlegs 10 are situated too far forwardly, they will be moved to the rear when the flap 6 is brought in the vertical position, as is shown in Figure 7. If the hindlegs 10 are situated too far rearwardly, the animal will be pushed forwardly by means of the bracket 12 shown in Figure 1 until the correct position of the hindlegs is attained. To that end there may be present in the milking parlour floor 7 sensors for detecting the position of the hindlegs 10.

As is apparent from Figure 6, the part of the milking machine to be connected to the animal's udder is located in its inoperative position under the floor, so that on the one hand no space is occupied thereby in the milking parlour or stable, while on the other by the accommodation thereof in a separate room the necessary hygiene can be maintained.

Once the animal has entered the milking parlour, the flap 6 is brought in the upward position by means of the hydraulic cylinder 9, as a result of which an opening is created in the milking parlour floor, through which opening the part 14 of the milking machine to be connected to the animal's udder can be moved upwardly (Figure 7).

After the various milking units 33, in a manner as described previously, have been brought into the position relative to the support 32 suitable with regard to the relevant animal, said support 32 is moved further upwardly along the guide rod 31 until the teats 17 of the udder are enveloped and the funnel-shaped part 19 is contiguous to the udder. The teat cups 15 are then still in the downward position, as also indicated in Figure 2, so that the cleaning device may clean, disinfect, dry and/or massage the animal's teats, in so far as this is desired. This situation is shown in Figure 8.

In a manner as described previously, the teat cups 15 are subsequently moved upwardly, so that the milking operation can be started, which is shown in Figure 9.

After the milking operation has been completed, which can be detected e.g. by means of a fluid flow meter arranged somewhere in the milk tube, the support is moved downwardly again along the guide rod 31, so that, by means of the hydraulic cylinder 9, the flap 6 can be swivelled to the substantially horizontal position, after which the animal can leave the milking parlour.

In accordance with the invention, the control of the implement may be effected by means of a computer, while hydraulic, pneumatic or electric means may be provided for moving the various parts thereof. The metering of fodder during milking may also be controlled by a computer, for which purpose the animals may be provided with an identification system, e.g. a transmitter on a collar, so that the metering of fodder may be adapted to the conditions of the relevant animal. In addition, a registration may be conducted of the number of times that and the moments when the animal visits the milking parlour, the temperature and other data relating to the milk, etc.

The embodiment shown should be considered as such and only serves as an explanation of the invention which should not be considered as being restricted to this embodiment.

0207572

Claims:

1.       An implement for milking animals, such as cows, comprising at least one milking parlour and at least one milking machine having at least one teat cup connectable to a teat of the animal, characterized in that the teat cup is provided with a cleaning device which is positioned substantially symmetrically around the centreline of the teat cup.

2.       An implement as claimed in claim 1, characterized in that the cleaning liquid or air may be supplied to the cleaning device through the milk tube of the teat cup.

3.       An implement as claimed in any one of the preceding claims, characterized in that the teat cup is movable in height relative to the cleaning device.

4.       An implement as claimed in any one of the preceding claims, characterized in that the cleaning device comprises a flexible, conical catching device for the teat.

5.       An implement as claimed in any one of the preceding claims, characterized in that the cleaning device comprises a rotary brush.

6.       An implement as claimed in claim 5, characterized in that the brush is of annular design having inwardly directed hairs, it being possible for the brush to be positioned around a teat.

7.       An implement as claimed in claim 6, characterized in that the brush includes a bearing at its outer circumference and that the hairs of the brush are directed substantially towards the centreline of the brush but do not reach as fas as said centreline.

8.       An implement as claimed in any one of the preceding claims, characterized in that several cleaning devices are mounted on a support, at least one cleaning device being movable in a horizontal plane relative to an other cleaning device.

9.       An implement as claimed in any one of the preceding claims, characterized in that, in its rest position, the milking cluster is located under the milking parlour floor.

10.      An implement as claimed in claim 9, characterized

**0207572**

in that the milking cluster is swivable about a substantially horizontal shaft from its rest position to an operative
position.

0207572

FIG. 1

FIG. 2

FIG. 3

0207572

FIG. 4

FIG.5

FIG.6

FIG.7

FIG.8

FIG.9

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 918 766 (E.D. DYKE) * Page 3, lines 74-81; figures 2-4 * | 1 | A 01 J 7/00<br>A 01 J 5/08<br>A 01 K 13/00<br>A 01 K 1/12 |
| A | --- | 2 | |
| A | DE TELEGRAAF, 4th December 1984, page T23; E. BOS: "Land- en tuinbouw" <br> --- | 9 | |
| A | US-A-2 952 860 (J.C. GEORGE) * Column 1, line 66 - column 3, line 21; figures 1-4 * <br> --- | 5-7 | |
| A | DE-A-2 622 794 (ALFA-LAVAL AGRAR GmbH) <br> --- | | **TECHNICAL FIELDS SEARCHED (Int. Cl.4)** |
| A | US-A-4 010 714 (IWAO NOTSUKI et al.) <br> --- | | A 01 J<br>A 01 K |
| A | GB-A-2 007 486 (D.E. AKERMAN) <br> ----- | | |

The present search report has been drawn up for all claims

| Place of search | Date of completion of the search | Examiner |
|---|---|---|
| THE HAGUE | 07-10-1986 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82